# EUROPÄISCHE PATENTSCHRIFT

(11) **EP 1 812 698 B1**
(45) Veröffentlichungstag und Bekanntmachung des Hinweises auf die Patenterteilung: **23.04.2008**
(21) Anmeldenummer: 05805701.9
(22) Anmeldetag: 08.11.2005
(51) Int. Cl.: F02B 37/22, F02B 37/18

(54) **ABGASTURBOLADER FÜR EINE BRENNKRAFTMASCHINE**
EXHAUST-GAS TURBOCHARGER FOR AN INTERNAL COMBUSTION ENGINE
TURBOCOMPRESSEUR A GAZ D'ECHAPPEMENT D'UN MOTEUR A COMBUSTION INTERNE

(30) Priorität: 18.11.2004 DE 102004055571
(43) Veröffentlichungstag der Anmeldung: 01.08.2007
(73) Patentinhaber: Daimler AG, 70327 Stuttgart (DE)
(72) Erfinder: HERTWECK, Gernot, 70736 Fellbach (DE); HIRTH, Torsten, 71277 Rutesheim (DE); KRÄTSCHMER, Stephan, 73527 Schwäbisch Gmünd (DE); LÖFFLER, Paul, 70199 Stuttgart (DE); SUMSER, Siegfried, 70327 Stuttgart (DE)
(86) Internationale Anmeldenummer: PCT/EP2005/011928
(87) Internationale Veröffentlichungsnummer: WO 2006/053653

(56) Entgegenhaltungen:
- WO-A-03/044327
- WO-A-20/04053310
- DE-A1- 10 222 917
- DE-A1- 10 303 777
- DE-A1- 19 618 160
- DE-A1- 19 836 677
- US-A- 4 526 004
- PATENT ABSTRACTS OF JAPAN Bd. 013, Nr. 071 (M-799), 17. Februar 1989 (1989-02-17) & JP 63 272910 A (MAZDA MOTOR CORP), 10. November 1988 (1988-11-10)

## Beschreibung

Die Erfindung betrifft einen Abgasturbolader für eine Brennkraftmaschine gemäß dem Oberbegriff des unabhängigen Anspruchs 1.

WO 2004/053310 A1 offenbart einen Bypass einer zweiflutigen Abgasturbine mittels eines Drehschiebers.

Aus der gattungsbildenden Patentschrift DE 196 18 160 C2 ist ein Abgasturbolader für eine Brennkraftmaschine bekannt, dessen Turbine ein Laufrad und ein Turbinengehäuse mit mindestens zwei durch eine Trennwand getrennte Fluten aufweist, wobei von mindestens einer Flut ein Bypass abzweigt. Über diesen Bypass kann von mindestens einer Flut Abgas abgeführt werden. Der Bypass ist derart gestaltet, dass ein Abschnitt des Bypasses durch die Trennwand der Fluten gebildet wird, wobei dieser Abschnitt Öffnungen aufweist, um eine Strömungsverbindung von dem Bypass mit mindestens einer der Fluten herzustellen oder zu unterbrechen. In diesem, durch die Trennwand gebildeten Abschnitt des Bypasses, ist ein Bypassventil angeordnet. Dieses Bypassventil ist mit Strömungskanälen versehen. Über das Bypassventil kann nun die Strömungsverbindung zwischen einem der beiden oder gleichzeitig beiden Fluten und dem Bypass-hergestellt werden, derart, dass die Strömungskanäle im Ventil sich mit den Öffnungen des Abschnittes in der Trennwand des Bypasses in teilweiser oder in vollständiger Überdeckung befinden. Der den Bypass bildende Abschnitt der Trennwand ist als Zylinderhülse mit den genannten Öffnungen und das Ventil als ein in der Zylinderhülse angeordneter Drehschieber mit den genannten Strömungskanälen ausgebildet. Die Beaufschlagung des Turbinenlaufrades durch das Abgas kann über das Ventil fein dosiert werden. Bei den genannten Öffnungen handelt es sich um nutförmige Ausnehmungen an der Wandung des Drehschiebers und nicht um Durchgangsöffnungen. Es gilt die hohen mechanischen Anforderungen des zwischenzeitlich serienmäßig eingeführten, optionalen Turbobremssystems, genannt Turbobrake, abzusichern. Eine der Grundlagen der Turbobrake einer zwei- oder mehrflutigen Turbine ist ein axial verschiebliches Turbobremsradialgitter direkt vor dem Turbinenrad und eine zweiflutige Abblaseinrichtung aus den Fluten der Turbine. Die Turbobremsradialgitter bestehen aus filigranen Feinguss-Matrizenteilen, die, je höher die mechanischen und thermischen Anforderungen aufgrund hoher Abgasmassenströme sind, umso höhere Kosten erfordern.

Der Erfindung liegt die Aufgabe zugrunde, einen Abgasturbolader für eine Brennkraftmaschine bereitzustellen, der den mechanischen und thermischen Anforderungen heutiger Turbobremssysteme gerecht wird.

Diese Aufgabe wird erfindungsgemäß mit den Merkmalen des unabhängigen Anspruchs 1 gelöst. Die abhängigen Ansprüche geben zweckmäßige Weiterbildungen und Verbesserungen der Erfindung an.

Der erfindungsgemäße Abgasturbolader, mit einem Verdichter und einer Turbine, die mindestens zwei Fluten aufweist, ist mit einer Strömungsverstelleinrichtung ausgestattet, die einen Drehschieber mit einer Drehachse, ein Drehschiebergehäuse mit einer ersten und einer zweiten Drehschiebergehäuseöffnung und einen Bypass mit einem Bypasseintritt und einem Bypassaustritt aufweist, wobei ein erster und ein zweiter Strömungskanal des Drehschiebers den Drehschieber quer zu seiner Drehachse durchdringen. Ein dritter Strömungskanal erstreckt sich in Richtung der Drehachse teilweise durch den Drehschieber und besitzt mantelseitig mindestens zwei Eintrittsöffnungen und stirnseitig mindestens eine Austrittsöffnung, wobei die Eintrittsöffnungen mit der ersten und der zweiten Drehschiebergehäuseöffnung in Deckung bringbar sind. Das Drehschiebergehäuse weist auf seiner turbinenradabgewandten Seite zwei Drehschiebergehäuseöffnungen, eine erste und eine zweite Drehschiebergehäuseöffnung, und auf seiner turbinenradzugewandten Seite drei Drehschiebergehäuseöffnungen, eine dritte, eine vierte und eine fünfte Drehschiebergehäuseöffnung, auf. Die erste und die zweite Drehschiebergehäuseöffnung beziehungsweise die dritte und die vierte Drehschiebergehäuseöffnung korrespondieren bei gesperrtem Bypass mit dem ersten beziehungsweise dem zweiten Strömungskanal des Drehschiebers. Bei geöffnetem Bypass korrespondieren die erste und die zweite Drehschiebergehäuseöffnung mit den mantelseitig im Drehschieber angeordneten Eintrittsöffnungen und die Austrittsöffnung des dritten Strömungskanals des Drehschiebers korrespondiert mit dem Bypasseintritt. Durch die beschriebene Anordnung kann in einer Motorbremsphase das gesamte Abgas in Folge einer Flutenreduzierung in diskret herabgesetzte Strömungsquerschnitte der Turbinenfluten mit erhöhter Drallgeschwindigkeit in den Turbinenradeintritt einströmen. Durch die Flutenreduzierung vor dem Feingussgitter wird die mechanische und thermische Anforderung an das Feingussgitter gesenkt. Die Anordnung der Kanäle des Drehschiebers erlaubt ein mechanisches, sicheres Sperren und Öffnen der Kanäle und führt außerdem zu einer kompakten Bauweise.

In einer vorteilhaften Ausführung der Erfindung durchdringen der erste und der zweite Strömungskanal des Drehschiebers den Drehschieber senkrecht zu seiner Drehachse. Durch diese Anordnung der Kanäle verkürzt sich die Kanallänge auf ihr Minimum und es können die einer Strömung anhaftenden Strömungsverlustbeiwerte verringert werden.

In einer weiteren vorteilhaften Ausführung weist der Drehschieber Dichtringe und mindestens eine Dichtleiste zur nahezu verlustfreien Strömungsführung auf.

In einer weiteren vorteilhaften Ausführung mündet der Bypass stromab des Drehschiebers in eine der Fluten der Turbine, wodurch eine Strömungsumleitung des Abgases von einer Flut auf eine andere Flut gewährleistet werden kann.

In einer weiteren vorteilhaften Ausführung sind der erste Strömungskanal und der zweite Strömungskanal nebeneinander und parallel zueinander angeordnet, so dass die nahezu gleichen Strömungsverlustbeiwerte der Strömung in den Strömungskanälen gewährleistet werden können.

In einer weiteren vorteilhaften Ausführung ist der dritte Strömungskanal quer, insbesondere senkrecht zu dem ersten und dem zweiten Strömungskanal angeordnet, wobei zwischen dem ersten beziehungsweise dem zweiten Strömungskanal und dem dritten Strömungskanal eine durchgehende Wandung des Drehschiebers vorliegt. Durch diese Anordnung ist eine Zusammenfassung von mindestens zwei oder mehreren Abgasleitungen in einen einzigen Strömungskanal unter Beachtung einer kompakten und sicheren Bauweise möglich.

Weitere Vorteile und zweckmäßige Ausführungen sind den weiteren Ansprüchen, der Figurenbeschreibung und den Zeichnungen zu entnehmen.

Dabei zeigen:
- Fig. 1: eine schematische Darstellung einer Brennkraftmaschine mit einem erfindungsgemäßen Abgasturbolader,
- Fig. 2: eine perspektivische Ansicht einer Strömungsverstelleinrichtung des erfindungsgemäßen Abgasturboladers mit einem Drehschieber und einem Drehschiebergehäuse in einer Stellung, bei der ein in der Strömungsverstelleinrichtung vorgesehener Bypass gesperrt ist,
- Fig. 3: eine Draufsicht der in Fig. 2 dargestellten Strömungsverstelleinrichtung für den erfindungsgemäßen Abgasturbolader,
- Fig. 4: eine weitere perspektivische Ansicht der Strömungsverstelleinrichtung für den erfindungsgemäßen Abgasturbolader mit dem Drehschieber und dem Drehschiebergehäuse in einer Stellung, bei der der Bypass geöffnet ist,
- Fig. 5: eine Draufsicht der in Fig. 4 dargestellten Strömungsverstelleinrichtung für den erfindungsgemäßen Abgasturbolader,
- Fig. 6: eine perspektivische Darstellung des Drehschiebergehäuses der Strömungsverstelleinrichtung für den erfindungsgemäßen Abgasturbolader,
- Fig. 7: einen Querschnitt durch die Strömungsverstelleinrichtung für den erfindungsgemäßen Abgasturbolader,
- Fig. 8: einen Längsschnitt durch die Strömungsverstelleinrichtung für den erfindungsgemäßen Abgasturbolader und
- Fig. 9: eine perspektivische Zusammenbaudarstellung der Strömungsverstelleinrichtung für den erfindungsgemäßen Abgasturbolader.

In den Figuren sind gleiche oder gleich wirkenden Bauteile mit gleichen Bezugszeichen versehen.

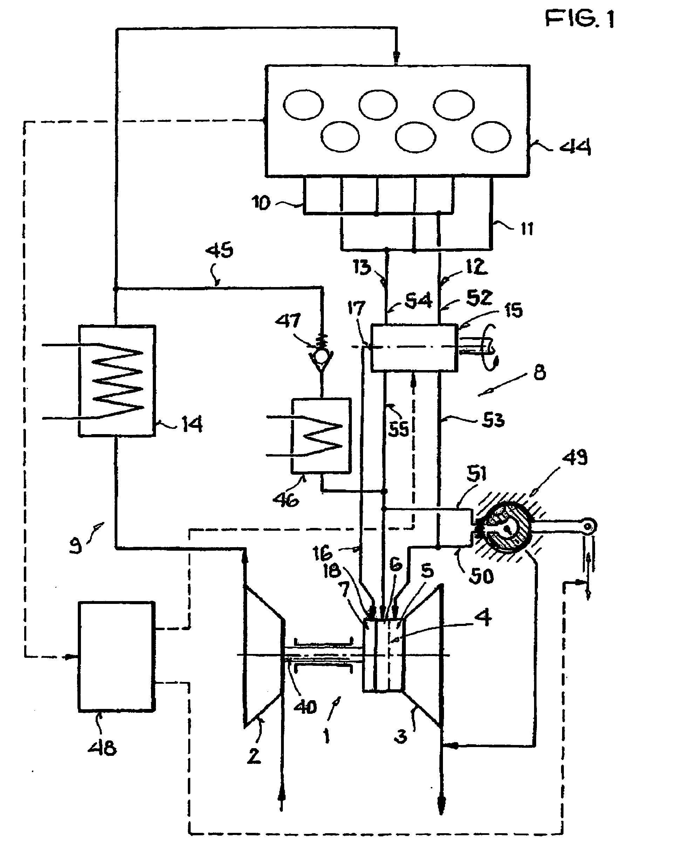

In Fig. 1 ist eine Brennkraftmaschine 44, ein Dieselmotor oder ein Ottomotor, für ein Kraftfahrzeug dargestellt, welche einen Abgasstrang 8 und einen Ansaugtrakt 9 aufweist. Der Brennkraftmaschine 44 ist ein Abgasturbolader 1 zugeordnet. Der Abgasturbolader 1 umfasst einen Verdichter 2, der über eine Welle 40 mit einer Turbine 3 drehfest verbunden ist. Die Turbine 3 wird vom Abgas der Brennkraftmaschine 44 angetrieben und treibt über die Welle 40 den Verdichter 2 an, so dass Verbrennungsluft vom Verdichter 2 angesaugt und komprimiert werden kann. Die Turbine 3 weist ein Turbinenrad 4 und drei Fluten auf, eine erste Flut 5, eine zweite Flut 6 und eine dritte Flut 7. Stromab des Verdichters 2 ist im Ansaugtrakt 9 der Brennkraftmaschine 44 ein Ladeluftkühler 14 zum Kühlen der komprimierten Verbrennungsluft untergebracht.

Die komprimierte und gekühlte Verbrennungsluft gelangt aus dem Ansaugtrakt 9 über nicht näher dargestellte Ansaugkanäle der Brennkraftmaschine 44 und Einlassventile der Brennkraftmaschine 44 in die nicht näher dargestellten Brennräume der nicht näher dargestellten Zylinder der Brennkraftmaschine 44. In diesen nicht näher dargestellten Brennräumen der Brennkraftmaschine 44 wird die Verbrennungsluft unter Zufuhr von Kraftstoff verbrannt und strömt in Form von Abgas über nicht näher dargestellte Auslassventile der Brennkraftmaschine 44 und Auslasskanäle der Brennkraftmaschine 44 in zwei stromab der Brennkraftmaschine 44 angeordnete Abgaskrümmer, einen ersten und einen zweiten Abgaskrümmer 10,11, ein. Der Abgasstrang 8 weist zwei Abgasleitungen auf, eine erste Abgasleitung 12 und eine zweite Abgasleitung 13. Die erste Abgasleitung 12 stellt die Verbindung des ersten Abgaskrümmers 10 mit der ersten Flut 5 der Turbine 3 dar. Die zweite Abgasleitung 13 verbindet den zweiten Abgaskrümmer 11 mit der zweiten Flut 6 der Turbine 3. Somit strömt das Abgas aus den Abgaskrümmern 10, 11 über die Abgasleitungen 12, 13 in die Fluten 5,6 der Turbine 3.

Stromauf der Turbine 3 ist eine Schiebereinrichtung 49 vorgesehen, die über einen ersten Schieberkanal 50 mit der in die erste Flut 5 mündende erste Abgasleitung 12 und über einen zweiten Schieberkanal 51 mit der in die zweite Flut 6 mündende zweite Abgasleitung 13 stromauf der Turbine 3 verbunden ist. Von der zweiten Abgasleitung 13 im Abgasstrang 8 der Brennkraftmaschine 44 zweigt eine Abgasrückführleitung 45 mit einem Abgasrückführkühler 46 und einem Abgasrückführventil 47 stromauf der Schiebereinrichtung 49 ab. Die Abgasrückführleitung 45 mündet stromab des Ladeluftkühlers 14 in den Ansaugtrakt 9.

Stromab der Abgaskrümmer 10,11 und stromauf der Abzweigung für die Abgasrückführleitung 45 ist eine Strömungsverstelleinrichtung 15 im Abgasstrang 8 vorgesehen. Die Strömungsverstelleinrichtung 15 teilt die Abgasleitungen 11 und 12 in insgesamt vier Teile auf, einem ersten Abgasleitungsteil 52, einem zweiten Abgasleitungsteil 53, einem dritten Abgasleitungsteil 54 und einem vierten Abgasleitungsteil 55. Der erste Abgasleitungsteil 52 und der zweite Abgasleitungsteil 53 bilden die erste Abgasleitung 12, wobei der erste Abgasleitungsteil 52 stromauf der Strömungsverstelleinrichtung 15 angeordnet ist und der zweite Abgasleitungsteil 53 stromab der Strömungsverstelleinrichtung 15 angeordnet ist. Der dritte Abgasleitungsteil 54 und der vierte Abgasleitungsteil 55 bilden die zweite Abgasleitung 13, wobei der dritte Abgasleitungsteil 54 stromauf der Strömungsverstelleinrichtung 15 und der vierte Abgasleitungsteil 55 stromab der Strömungsverstelleinrichtung 15 angeordnet ist. Von der Strömungsverstelleinrichtung 15 zweigt ein Bypass 16 ab, der eine Verbindung der Strömungsverstelleinrichtung 15 mit der dritten Flut 7 der Turbine 3 herstellt.

Neben der dargestellten Anordnung der Strömungsverstelleinrichtung 15 stromauf der Abzweigung für die Abgasrückführleitung 45 könnte z. B. die Strömungsverstelleinrichtung 15 stromab der Abzweigung der Abgasrückführleitung 45 angeordnet sein. Eine Anordnung der Strömungsverstelleinrichtung 15 stromab der Schiebereinrichtung 49 ist nicht zweckmäßig, da die Strömungsverstelleinrichtung 15 zur Unterstützung der Schiebereinrichtung 49 herangezogen werden soll.

Die Brennkraftmaschine 44, die Schiebereinrichtung 49 und die Strömungsverstelleinrichtung 15 stehen mit einer Regel- und Steuereinheit 48 der Brennkraftmaschine 44 elektrisch in Verbindung, damit eine Regelung der Schiebereinrichtung 49 und der Strömungsverstelleinrichtung 15 in Abhängigkeit von thermodynamischen Zustandsgrößen der Brennkraftmaschine 44 durchführbar ist.

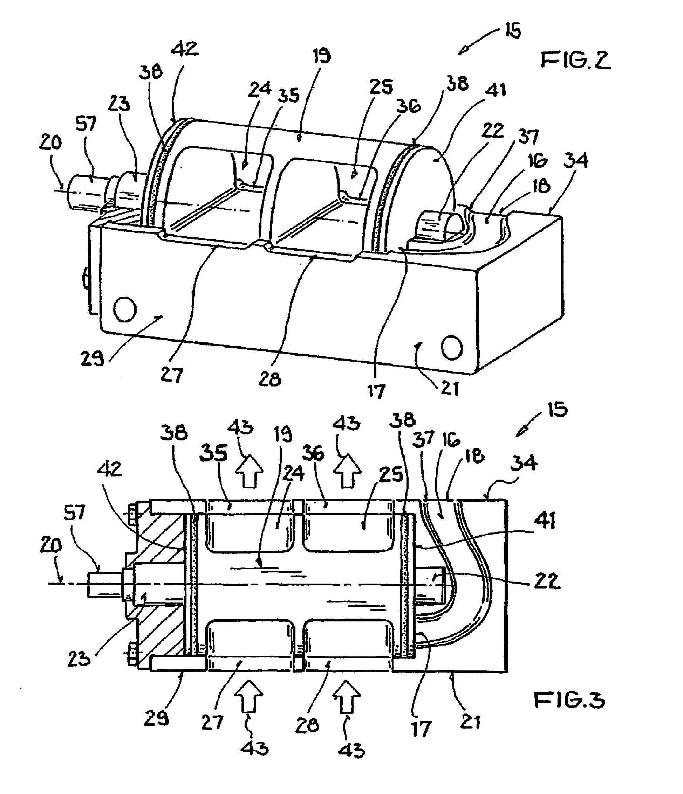

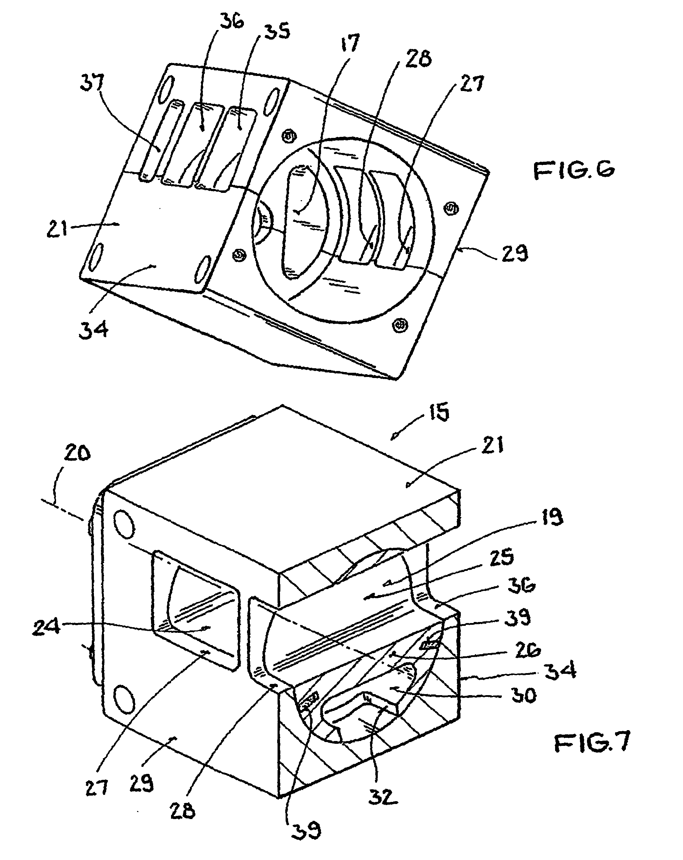

In Fig. 2 ist die Strömungsverstelleinrichtung 15 mit einem Drehschieber 19, mit seiner Drehachse 20 und einem Drehschiebergehäuse 21, dargestellt. Der Drehschieber 19 weist zwei Strömungskanäle, einen ersten Strömungskanal 24 und einen zweiten Strömungskanal 25, in dem in Fig. 2 gezeigten Bereich des Drehschiebers 19 auf. Das Drehschiebergehäuse 21 ist in dieser Figur entlang der Drehachse 20 des Drehschiebers 19 geschnitten abgebildet, so dass nur ein Teil des Drehschiebergehäuses 21 sichtbar ist. In Fig. 6 ist zur besseren Verständlichkeit das Drehschiebergehäuse 21 in perspektivischer Ansicht ohne den Drehschieber dargestellt.

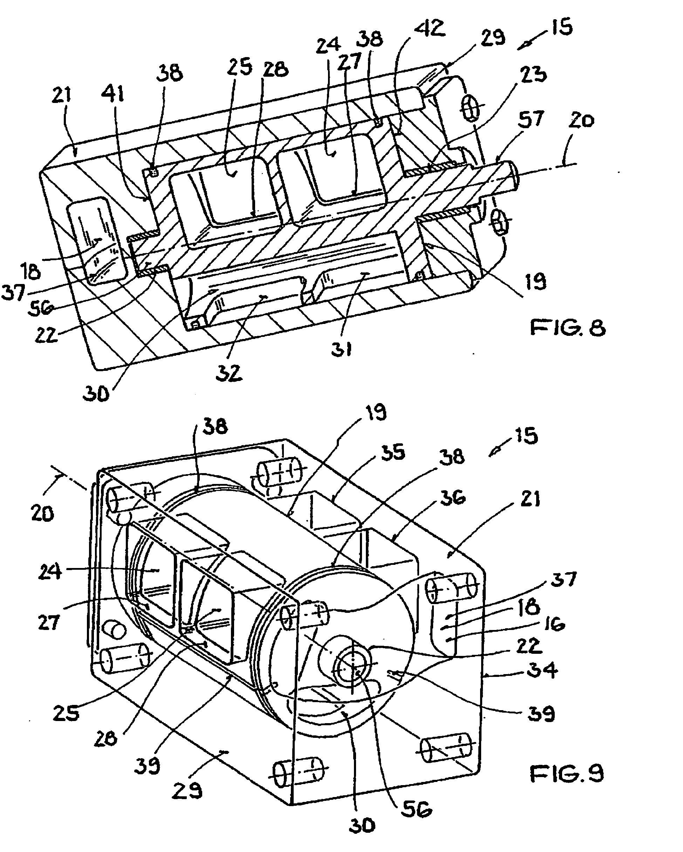

In Fig. 3 ist die Draufsicht der in Fig. 2 dargestellten Strömungsverstelleinrichtung 15 abgebildet. Die Pfeile 43 zeigen die Strömungsrichtung des Abgases von der Brennkraftmaschine 44 zur Turbine 3 bzw. zum Turbinenrad 4, womit an dem Drehschiebergehäuse 21 eine turbinenradabgewandte Seite 29 und eine turbinenradzugewandte Seite 34 definiert werden kann. Das Drehschiebergehäuse 21 weist ein der turbinenradabgewandten Seite 29 zwei Drehschiebergehäuseöffnungen auf, eine erste Drehschiebergehäuseöffnung 27 und eine zweite Drehschiebergehäuseöffnung 28. Auf der turbinenradzugewandten Seite 34 des Drehschiebergehäuses 21 sind drei weitere Drehschiebergehäuseöffnungen eingebracht, eine dritte Drehschiebergehäuseöffnung 35, eine vierte Drehschiebergehäuseöffnung 36 und eine fünfte Drehschiebergehäuseöffnung 37. In Fig. 9 ist zur besseren Verständlichkeit des Drehschiebergehäuses 21 im Zusammenbau mit dem Drehschieber 19 eine perspektivische Zusammenbaudarstellung der Strömungsverstelleinrichtung 15 abgebildet. Das Drehschiebergehäuse 21 ist so dargestellt, dass die Drehschiebergehäuseöffnungen 27, 28, 35, 36 und 37 sowie der Bypass 16 und sein Verlauf im Drehschiebergehäuse 21 gut sichtbar sind.

Der Drehschieber 19 weist zwei Stirnseiten auf, eine erste Stirnseite 41 und eine zweite Stirnseite 42. In Richtung der Pfeile 43 betrachtet, befindet sich in Fig. 3 die erste Stirnseite 41 auf der rechten Seite des Drehschiebers 19 im Innern des Drehschiebergehäuses und die zweite Stirnseite 42 befindet sich auf der linken Seite des Drehschiebers 19 ebenfalls innerhalb des Drehschiebergehäuses 21.

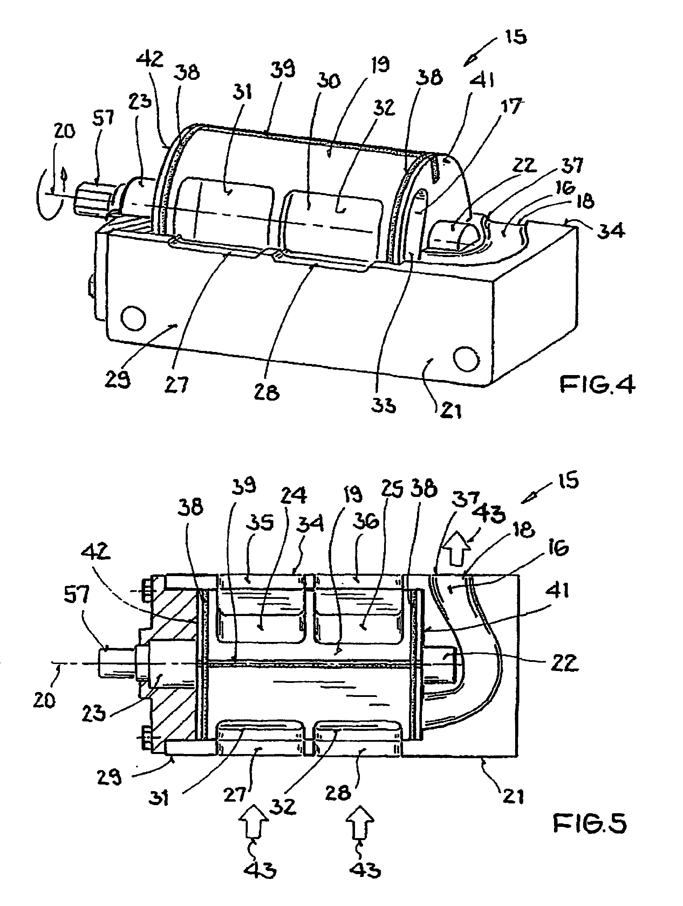

Das Drehschiebergehäuse 21 weist neben den Drehschiebergehäuseöffnungen 27, 28, 35, 36 und 37 den Bypass 16 mit einem Bypasseintritt 17 und einem Bypassaustritt 18 auf, wobei die fünfte Drehschiebergehäuseöffnung 37 auf der turbinenradzugewandten Seite 34 des Drehschiebergehäuses 21 den Bypassaustritt 18 des Bypasses 16 darstellt. Es ist auch möglich, neben der dargestellten Einbringung des Bypasses 16 in das Drehschiebergehäuse 21 den Bypass 16 in den Drehschieber 19 zu integrieren. Der Bypassaustritt 18 würde dann mit der Drehschiebergehäuseöffnung 37 korrespondieren. In diesem Fall, dass der Bypass 16 in den Drehschieber 19 integriert ist, wäre der Drehschieber 19 dann etwas länger auszubilden und der Bypasseintritt 17 entspräche der Austrittsöffnung 33 eines dritten Strömungskanals 30, der in Fig. 4 dargestellt ist.

Die in Fig. 2 beziehungsweise Fig. 3 dargestellte Position der Strömungsverstelleinrichtung 15 mit gesperrtem Bypass 16 entspricht einer Schließstellung. Der erste und der zweite Strömungskanal 24 beziehungsweise 25 geben die Drehschiebergehäuseöffnungen 27, 28, 35 und 36 frei, so dass das Abgas ohne Änderung seiner Strömungsrichtung von dem ersten Abgasleitungsteil 52 in den zweiten Abgasleitungsteil 53 beziehungsweise von dem dritten Abgasleitungsteil 54 in den vierten Abgasleitungsteil 55 strömen kann. Die Stirnseite 41 des Drehschiebers 19 sperrt dabei den Bypasseintritt 17 beziehungsweise den Bypass 16.

In Fig. 4 ist die Strömungsverstelleinrichtung 15 mit geöffnetem Bypass 16 in einer Öffnungsstellung dargestellt. Der Drehschieber 19 weist den dritten Strömungskanal 30 auf, der sich nur teilweise durch den Drehschieber 19 und parallel zur Drehachse 20 des Drehschiebers 19 erstreckt. Der dritte Strömungskanal 30 besitzt mantelseitig zwei Eintrittsöffnungen, eine erste Eintrittsöffnung 31 und eine zweite Eintrittsöffnung 32. An der dem Bypass 16 zugewandten ersten Stirnseite 41 besitzt der dritte Strömungskanal 30 eine Austrittsöffnung 33, die in dieser Position des Drehschiebers 19 mit dem Bypasseintritt 17 korrespondiert. In der Öffnungsstellung des Drehschiebers 19 wird die Strömung des Abgases aus der ersten und der zweiten Abgasleitung 12 beziehungsweise 13 in den Bypass 16 umgeleitet, wobei der erste und der zweite Strömungskanal 24 beziehungsweise 25 des Drehschiebers 19 gesperrt sind.

In Fig. 7 ist zur besseren Verständlichkeit der Lage der Strömungskanäle 24,25 und 30 des Drehschiebers 19 zueinander ein Querschnitt durch die Strömungsverstelleinrichtung 15 dargestellt. Der Querschnitt erstreckt sich senkrecht zur Drehachse 20 des Drehschiebers 19 und gibt den zweiten Strömungskanal 25 sowie den dritten Strömungskanal 30 frei. Der dritte Strömungskanal 30 weist einen kreissegmentförmigen Querschnitt auf. Der erste und der zweite Strömungskanal 24 beziehungsweise 25 liegen parallel zueinander und sind nebeneinander angeordnet. Der dritte Strömungskanal 30 verläuft senkrecht zu den beiden Strömungskanälen 24 beziehungsweise 25, wobei eine durchgehende Wandung 26 zwischen dem ersten beziehungsweise zweiten Strömungskanal 24, 25 und dem dritten Strömungskanal 30 liegt.

In Fig. 8 ist ein Längsschnitt durch die Strömungsverstelleinrichtung 15 dargestellt. Der Drehschieber 19 weist an seiner ersten Stirnseite 41 einen ersten Zapfen 56 sowie an seiner zweiten Stirnseite 42 einen zweiten Zapfen 57 auf. Der erste Zapfen 56 an der ersten Stirnseite 41 ist kürzer ausgebildet als der zweite Zapfen 57 an der zweiten Stirnseite 42 und liegt vollkommen innerhalb des Drehschiebergehäuses 21. Der zweite Zapfen 57 an der zweiten Stirnseite 42 liegt nur teilweise innerhalb des Drehschiebergehäuses 21. Der Drehschieber 19 ist in dem Drehschiebergehäuse 21 drehbar gelagert, wobei der erste Zapfen 56 in einem ersten Lager 22 und der zweite Zapfen 57 in einem zweiten Lager 23 aufgenommen ist. Mit dem herausragenden Ende des zweiten Zapfens 57 kann beispielsweise ein nicht näher dargestellter Stellmotor verbunden werden, der den Drehschieber 19 über die Regel- und Steuereinheit 48 in die gewünschte Stellung bringt. Die hier gezeigte Lagerart des ersten Lagers 22 beziehungsweise des zweiten Lagers 23 stellt ein Gleitlager dar. Das erste Lager 22 und das zweite Lager 23 könnten beispielsweise auch ein Wälzlager darstellen.

Der Drehschieber 19 weist an seinem Umfang in der Nähe der Lager 22 und 23 je einen Dichtring 38 auf. Der Dichtring 38 verläuft in Umfangsrichtung und ist nach Art eines Kolbenrings gestaltet. Auf der Mantelfläche des Drehschiebers 19 sind, wie in Fig. 7 dargestellt, zwei Dichtleisten 39 vorgesehen, die sich in Richtung der Drehachse 20 der Länge nach erstrecken. Möglich ist auch, mehrere Dichtringe und Dichtleisten am Drehschieber 19 vorzusehen. Durch die Dichtringe 38 und Dichtleisten 39 können Strömungsverluste durch Undichtigkeiten minimiert werden.

Die Strömungsverstelleinrichtung 15 ist in dem dargestellten Ausführungsbeispiel als ein separates Bauteil ausgeführt, das gemeinsam mit dem Abgasturbolader eine Baueinheit bildet. Die Strömungsverstelleinrichtung 15 wäre prinzipiell auch in das Turbinengehäuse der Turbine 3 zu integrieren.

Um ausgehend von der Schließstellung des Drehschiebers 19 die Öffnungsstellung des Drehschiebers 19 herzustellen, wird der Drehschieber 19 so weit gedreht, bis die beiden Strömungskanäle 24 und 25 nicht mehr mit den Drehschiebergehäuseöffnungen 27 und 28 beziehungsweise 35 und 36 korrespondieren, sondern der in dem Drehschieber 19 integrierte dritte Strömungskanal 30 die Drehschiebergehäuseöffnungen 27 und 28 über die Eintrittsöffnungen 31 und 32 freigibt. In der Öffnungsstellung kann das Abgas aus dem ersten Abgaskrümmer 10 und dem zweiten Abgaskrümmer 11 über den ersten Abgasleitungsteil 52 und den dritten Abgasleitungsteil 54 in die erste Eintrittsöffnung 31 beziehungsweise in die zweite Eintrittsöffnung 32 des dritten Strömungskanals 30 des Drehschiebers 19 strömen. Über den dritten Strömungskanal 30 strömt das Abgas weiter in den Bypass 16 und von dort in die dritte Flut 7 der Turbine 3. Die beiden anderen Fluten 5 und 6 der Turbine 3 werden somit nicht vom Abgas durchströmt.

Die Einstellung der Schließstellung ausgehend von der Öffnungsstellung des Drehschiebers 19 erfolgt durch Weiterdrehen des Drehschiebers 19, bis die Strömungskanäle 24 und 25 mit den Drehschiebergehäuseöffnungen 27 und 28 beziehungsweise 35 und 36 korrespondieren und der Bypasseintritt 17 von der Stirnseite 41 gesperrt ist. In der Schließstellung strömt das Abgas aus dem ersten Abgaskrümmer 10 und aus dem zweiten Abgaskrümmer 11 über den ersten Abgasleitungsteil 52 und den dritten Abgasleitungsteil 54 in den ersten Strömungskanal 24 beziehungsweise in den zweiten Strömungskanal 25 und von dort weiter in den zweiten Abgasleitungsteil 53 beziehungsweise in den vierten Abgasleitungsteil 55, um schließlich über die erste Flut 5 beziehungsweise die zweite Flut 6 das Turbinenrad 4 der Turbine 3 zu beaufschlagen.

In einer Motorbremsphase der Brennkraftmaschine 44 befindet sich der Drehschieber 19 in seiner Öffnungsstellung, so dass das Abgas aus dem ersten Abgaskrümmer 10 und dem zweiten Abgaskrümmer 11 über den ersten Abgasleitungsteil 52 und den dritten Abgasleitungsteil 54 in die erste Eintrittsöffnung 31 beziehungsweise in die zweite Eintrittsöffnung 32 des dritten Strömungskanals 30 des Drehschiebers 19 strömen kann. Über den dritten Strömungskanal 30 strömt das Abgas weiter in den Bypass 16 und von dort in die dritte Flut 7 der Turbine 3. Die beiden anderen Fluten 5 und 6 der Turbine 3 werden somit nicht vom Abgas durchströmt.

Im Ausführungsbeispiel einer dreiflutigen Turbine endet der Bypass in der dritten Flut 7. Bei einer zweiflutigen Turbine mündet der Bypass 16 in eine der beiden Fluten der Turbine. Bei einer asymmetrischen Turbine mündet der Bypass 16 bevorzugt in die kleinere der beiden Turbinenfluten, so dass in der Motorbremsphase die kleinere der beiden Fluten vom Abgas beaufschlagt wird.

Außerhalb der Motorbremsphase der Brennkraftmaschine 44 steht der Drehschieber 19 überwiegend in seiner Schließstellung. Je nach Betriebsweise kann der Drehschieber auch außerhalb des Motorbremsbetriebs für eine Änderung der Turbinenbeaufschlagung herangezogen werden. Damit ist es möglich, durch die Änderung der Stellung des Drehschiebers 19 von der Schließstellung in die Öffnungsstellung von einer Stoßaufladung, wie sie bei der Beaufschlagung eines zweiflutigen oder mehrflutigen Turbine eingesetzt ist, in eine Stauaufladung überzugehen. In der Stauaufladung wird nur eine der Turbinenfluten mit Abgas beaufschlagt, dadurch kann der Wirkungsgrad der Brennkraftmaschine erhöht werden.

## Patentansprüche

1. Abgasturbolader für eine Brennkraftmaschine mit einem Verdichter (2) in einem Ansaugtrakt (9) und einer Turbine (3) in einem Abgasstrang (8) mit einem Turbinenrad (4) und mit mehreren Fluten, wenigstens einer ersten und einer zweiten Flut (5,6), mit einer stromauf der Fluten angeordneten Strömungsverstelleinrichtung (15) mit einem Bypass (16), wobei die Strömungsverstelleinrichtung (15) einen Drehschieber (19) mit einer Drehachse (20) und ein Drehschiebergehäuse (21) aufweist, wobei mittels des Drehschiebers (19) eine Verbindung zwischen dem Bypass (16) und den Fluten (5,6) herstellbar oder unterbrechbar ist und der Drehschieber (19) hierzu mindestens zwei Strömungskanäle, einen ersten Strömungskanal (24) und einen zweiten Strömungskanal (25), aufweist und das Drehschiebergehäuse (21) mindestens zwei Drehschiebergehäuseöffnungen, eine erste Drehschiebergehäuseöffnung (27) und eine zweite Drehschiebergehäuseöffnung (28) auf der turbinenradabgewandten Seite (29), aufweist,
**dadurch gekennzeichnet,**
**dass** der erste Strömungskanal (24) und der zweite Strömungskanal (25) des Drehschiebers (19) den Drehschieber (19) quer zur Drehachse (20) durchdringen und der Drehschieber (19) einen weiteren dritten Strömungskanal (30) aufweist, der sich durch den Drehschieber (19) in Richtung der Drehachse (20) teilweise erstreckt und mantelseitig mindestens zwei mit den Drehschiebergehäuseöffnungen (27,28) in Deckung bringbare Eintrittsöffnungen, eine erste Eintrittsöffnung (31) und eine zweite Eintrittsöffnung (32) aufweist und an einer Austrittsöffnung (33) endet, wobei im Drehschiebergehäuse (21) auf der turbinenradzugewandten Seite (34) mindestens drei weitere Drehschiebergehäuseöffnungen, eine dritte Drehschiebergehäuseöffnung (35), eine vierte Drehschiebergehäuseöffnung (36) und eine fünfte Drehschiebergehäuseöffnung (37), vorgesehen sind.

2. Abgasturbolader nach Anspruch 1,
**dadurch gekennzeichnet,**
**dass** der erste Strömungskanal (24) und der zweite Strömungskanal (25) des Drehschiebers (19) den Drehschieber (19) senkrecht zur Drehachse (20) durchdringen.

3. Abgasturbolader nach Anspruch 1 oder 2,
**dadurch gekennzeichnet,**
**dass** der Drehschieber (19) wenigstens zwei Dichtringe (38) und mindestens eine Dichtleiste (39) aufweist.

4. Abgasturbolader nach einem der Ansprüche 1 bis 3,
**dadurch gekennzeichnet,**
**dass** der Bypass (16) stromab des Drehschiebers (19) in eine Flut (7) der mindestens zwei Fluten (5,6) der Turbine (3) mündet.

5. Abgasturbolader nach einem der Ansprüche 1 bis 4,
**dadurch gekennzeichnet,**
**dass** der erste Strömungskanal (24) und der zweite Strömungskanal (25) parallel zueinander, nebeneinander angeordnet sind.

6. Abgasturbolader nach einem der Ansprüche 1 bis 5,
**dadurch gekennzeichnet,**
**dass** der dritte Strömungskanal (30) im Drehschieber (19) quer zu dem ersten Strömungskanal (24) beziehungsweise dem zweiten Strömungskanal (25) angeordnet ist, wobei zwischen dem ersten Strömungskanal (24) beziehungsweise dem zweiten Strömungskanal (25) und dem dritten Strömungskanal (30) eine durchgehende Wandung (26) des Drehschiebers (19) liegt.

## Claims

1. An exhaust-gas turbocharger for an internal combustion engine having a compressor (2) in an intake train (9) and a turbine (9) in an exhaust train (8) with a turbine wheel (4) and a plurality of flows, at least one first and one second flow (5, 6), with a flow adjusting device (15) positioned upstream of the flows with a bypass (16), the flow adjusting device (15) having a rotary slide valve (19) with an axis of rotation (20) and a rotary slide valve housing (21), it being possible to make or break a connection between the bypass (16) and the flows (5, 6) by means of the rotary slide valve (19) and the rotary slide valve (19) having at least two flow channels, one first flow channel (14) and one second flow channel (25), to this end and the rotary slide valve housing (21) having at least two rotary slide valve housing openings, one first rotary slide valve housing opening (27) and one second rotary slide valve housing opening (28),
**characterised in that**
the first flow channel (24) and the second flow channel (25) of the rotary slide valve (19) pass through the rotary slide valve (19) at right angles to the axis of rotation (20), and the rotary slide valve (19) has a further third flow channel (30) which extends through part of the rotary slide valve (19) along the axis of rotation (20) and on the casing side has at least two inlet openings, a first inlet opening (31) and a second inlet opening (32), which can be moved to cover the rotary slide valve housing openings (27, 28) and ends in an outlet opening (33), there being provided in the rotary slide valve housing (21) on the side (34) facing the turbine wheel at least three further rotary slide valve housing openings, a third rotary slide valve housing opening (35), a fourth rotary slide valve housing opening (36) and a fifth rotary slide valve housing opening (37).

2. An exhaust-gas turbocharger in accordance with claim 1,
**characterised in that**
the first flow channel (24) and the second flow channel (25) of the rotary slide valve (19) pass through the rotary slide valve (19) perpendicular to the axis of rotation (20).

3. An exhaust-gas turbocharger in accordance with claim 1 or 2,
**characterised in that**
the rotary slide valve (19) has at least two sealing rings (38) and at least one sealing strip (39).

4. An exhaust-gas turbocharger in accordance with one of claims 1 to 3,
**characterised in that**
the bypass (16) flows into one (7) of the at least two flow (5, 6) of the turbine (3) downstream of the rotary slide valve (19).

5. An exhaust-gas turbocharger in accordance with one of claims 1 to 4,
**characterised in that**
the first flow channel (24) and the second flow channel (25) are positioned parallel and adjacent to one another.

6. An exhaust-gas turbocharger in accordance with one of claims 1 to 5,
**characterised in that**
the third flow channel (30) is positioned in the rotary slide valve (19) at right angles to the first flow channel (24) and the second flow channel (25), a continuous wall (26) of the rotary slide valve (19) lying between the first and second flow channel (24, 25) and the third flow channel (30).

## Revendications

1. Turbocompresseur à gaz d'échappement pour un moteur à combustion interne, comprenant un compresseur (2) dans un circuit d'aspiration (9) et une turbine (3) dans un circuit d'échappement (8) avec une roue de turbine (4) et avec plusieurs flux, au moins un premier et un second flux (5, 6) avec un dispositif de réglage d'écoulement (15) agencé en amont des flux et doté d'un by-pass (16), le dispositif de réglage d'écoulement (15) comportant un tiroir rotatif (19) avec un axe de rotation (20) et un boîtier de tiroir (21), dans lequel au moyen du tiroir rotatif (19) une liaison entre le by-pass (16) et les flux (5, 6) peut être établie ou interrompue, et à cet effet le tiroir rotatif (19) comprend au moins deux canaux d'écoulement, à savoir un premier canal d'écoulement (24) et un second canal d'écoulement (25), et le boîtier de tiroir (21) présente au moins deux ouvertures de boîtier, à savoir une première ouverture de boîtier (27) et une seconde ouverture de boîtier (28) sur le côté (29) détourné de la roue de turbine,
**caractérisé en ce que** le premier canal d'écoulement (24) et le second canal d'écoulement (25) du tiroir rotatif (19) traversent le tiroir rotatif (19) transversalement à l'axe de rotation (20), et le tiroir rotatif (19) présente un autre troisième canal d'écoulement (30) qui s'étend à travers le tiroir rotatif (19) partiellement en direction de l'axe de rotation (20) et comporte du côté enveloppe au moins deux ouvertures d'entrée, susceptibles d'être amenées en coïncidence avec les ouvertures de boîtier (27, 28), à savoir une première ouverture d'entrée (31) et une seconde ouverture d'entrée (32), et se termine à une ouverture de sortie (33), et dans le boîtier de tiroir (21) du côté tourné vers la roue de turbine (34) sont prévues au moins trois autres ouvertures de boîtier, à savoir une troisième ouverture de boîtier (35), une quatrième ouverture de boîtier (36) et une cinquième ouverture de boîtier (37).

2. Turbocompresseur à gaz d'échappement selon la revendication 1,
**caractérisé en ce que** le premier canal d'écoulement (24) et le second canal d'écoulement (25) du tiroir rotatif (19) traversent le tiroir rotatif (19) perpendiculairement à l'axe de rotation (20).

3. Turbocompresseur à gaz d'échappement selon la revendication 1 ou 2,
**caractérisé en ce que** le tiroir rotatif (19) comprend au moins deux bagues d'étanchéité (38) et au moins une barrette d'étanchéité (39).

4. Turbocompresseur à gaz d'échappement selon l'une des revendications 1 à 3,
**caractérisé en ce que** le by-pass (16) débouche en aval du tiroir rotatif (19) dans l'un des flux (7) desdits au moins deux flux (5, 6) de la turbine (3).

5. Turbocompresseur à gaz d'échappement selon l'une des revendications 1 à 4,
**caractérisé en ce que** le premier canal d'écoulement (24) et le second canal d'écoulement (25) sont agencés parallèlement l'un à l'autre et à côté l'un de l'autre.

6. Turbocompresseur à gaz d'échappement selon l'une des revendications 1 à 5,
**caractérisé en ce que** le troisième canal d'écoulement (30) est agencé dans le tiroir rotatif (19) transversalement au premier canal d'écoulement (24) ou respectivement au second canal d'écoulement (25), et une paroi continue (26) du tiroir rotatif (19) est située entre le premier canal d'écoulement (24) ou respectivement le second canal d'écoulement (25) et le troisième canal d'écoulement (30).
